# EUROPEAN PATENT APPLICATION

(11) **EP 2 025 594 A1**
(43) Date of publication of application: **18.02.2009**
(21) Application number: 06743478.7
(22) Date of filing: 11.05.2006
(51) Int. Cl.: B64F 1/02, B64C 39/02

(54) **DEVICE AND METHOD FOR RECOVERING UNMANNED AIRBORNE VEHICLES**

(71) Applicant: Aerovision Vehiculos Aereos, S.L., 20009, San Sebastian (ES)
(72) Inventor: TURRILLAS LAS HERAS, Arturo, E-20009 San Sebastian (ES)
(74) Representative: Carpintero Lopez, Francisco
(86) International application number: PCT/ES2006/000238
(87) International publication number: WO 2007/132025

(57) **Abstract**

The invention relates to a device for recovering unmanned airborne vehicles comprising support means connected to the ground and retention means connected to the support means, it being possible for the device to occupy a non-operational position and an operational position in which the retention means are interposed in the path of the unmanned airborne vehicle. The support means consist of at least one inflatable element (1) comprising a part which, in the inflated position, has two vertical branches, and the retention means (5) are joined to the mentioned part of the at least one inflatable element (1) by sliding means (2), (4), (6), (7), such that the retention means (5), by the thrust of the unmanned airborne vehicle, move and at least partially surround the mentioned airborne vehicle, which is confined in the mentioned retention means.

## Description

### Field of the Invention

The present invention relates to a device for recovering unmanned airborne vehicles and to a method for recovery by means of said device, being applicable in the field of civil and military aviation in which this type of aircraft is used for air surveillance and inspection tasks, with the aim of retrieving said vehicle by means of a device and method for recovery which is very simple, quick and effective, which allows its application both in recovery operations at sea and on land.

### Background of the Invention

Unmanned airborne vehicles are usually used today in inspection or surveillance operations both in the civil and in the military field, for example with the aim of observing the sea surface or certain coastal areas from the air for very different purposes, such as the location of shoals of fish or shipwreck remains, identification of ships, conducting sea rescue tasks or carrying out atmospheric measurements.

In sea applications, said unmanned vehicles are usually transported on most occasions to the area object of observation in a vessel from which both the take-off and the landing, or better said in the case of this type of vehicle, the launch and retrieval thereof, is carried out.

There are cases when a coastal area is to be inspected or the observation point is not at a great distance from the coast, in which said airborne vehicles are launched and retrieved from the coast itself.

It is important to emphasize the relevance of the retrieval means for retrieving this type of vehicle given that in the event that there is a failure thereof, the vehicle itself can be destroyed as a result, in addition to harming people or damaging installations in the vicinity, in the vessels or on land.

Some of the means traditionally used for the recovery at sea of this type of airborne vehicle are included in invention patents US 3,980,259, US 4,311,290 and US 4,753,400, and consist of deploying a line from a ship by means of a boom, a kite, any type of parachute or any type of similar support means, such that the vehicle passes through the area in which the line is located, being hooked thereto by means of a hook or snap hook, the airborne vehicle being retrieved when the line is drawn in. The problem with this type of recovery means is the difficulty of accurately positioning the vehicle so that the latter hooks onto the line, as well as in the recovery without said vehicle being damaged.

In addition, other airborne vehicle recovery means are known consisting of the arrangement of a net with large dimensions in the deck of a ship by means of using towers, cranes or similar support elements between which said net is arranged. The problem of these means is the high weight of the elements forming them, as well as the complexity of the installation necessary for the arrangement of the net, all this with a permanent character in the ship.

There is another type of means with which the problems set forth above are partially solved, which means have a mobile character and consist of using telescopic, deployable or collapsible posts, although said installation still has large dimensions and weight.

In other cases, the retrieval of the unmanned airborne vehicle, due to use requirements of the vehicle itself, is carried out on land, there being problems very similar to those occurring in the case of retrieval at sea, given that a heavy vehicle is usually used for supporting each of the structural elements, such as towers or telescopic elements supporting the deployed net, with the addition of the complexity of said vehicles having to have leveling means for the stable arrangement of the net in those cases in which the terrain has a certain slope, has irregularities or has a difficult access.

In short, all these means have great difficulties for their transport and mobility, given that they comprise equipment with large dimensions and weight and require complex operations for their assembly, which is slow and difficult and must be carried out by specialized personnel.

Based on the above, the importance in the selection of the location in which said airborne vehicle retrieval means are assembled is inferred, therefore the decision of their location must be meticulously studied, since the disassembly and the new installation of the means involves a high cost as well as a very considerable time loss.

In these cases, the airborne vehicle collides against the net and then falls to the ground since the airborne vehicle does not land on the ground but rather is braked by the net in mid-flight. It is thus possible for the vehicle to be damaged, because of the actual collision against the net, which is violent enough to cause its complete braking, and because of the collision against the ground.

Some of these means, comprising the arrangement of an element for retaining the vehicle, such as a net for example, between structural elements, such as posts for example, are included in invention patents US 4,456,205, US 4,809,933, US 4,056,247, US 4,147,317 and US 4,143,840.

### Description of the Invention

The present invention relates to a device for recovering unmanned airborne vehicles, as well as to a method for carrying out said recovery, which is a progress in the devices and methods used up until now, and fully and satisfactorily solves the problems set forth above, in the line of forming a portable and easily transportable device for recovery, given its reduced weight, the assembly and disassembly of which is carried out quickly and simply, not requiring more than a single person to that end, which allows quickly changing its location, resulting in a highly versatile device which can be used both in recovery operations at sea, such as for example in the deck of a ship, and on land. The device also allows achieving the retrieval of the aircraft without it being damaged.

The device of the invention comprises support means connected to the ground and retention means connected to the support means, it being possible for the device to occupy a non-operational position and an operational position in which the retention means are interposed in the path of the unmanned airborne vehicle, with the particularity that the support means consist of an inflatable element comprising a part which, in the inflated position, has two vertical branches and the retention means are joined to the mentioned part of the at least one inflatable element by sliding means, such that the retention means, by the thrust of the unmanned airborne vehicle, move to progressively brake the airborne vehicle and at least partially surround the mentioned aircraft which, once braked, is confined in the mentioned retention means. The force of the collision against the retention means is thus reduced and the aircraft is prevented from falling to the ground and being damaged.

The mentioned at least one inflatable element, in the inflated position, is supported on the ground, either directly on the terrain for its recovery from land or on the deck of a vessel for the recovery from the sea, its two vertical branches being in an upright (substantially vertical) position and the retention means being deployed between the mentioned vertical branches.

The inflatable element can comprise means for fixing and anchoring to the ground which allow their anchoring in those situations requiring it, such as for example in the case of the terrain having a pronounced slope or when the atmospheric conditions are adverse. Likewise, means for anchoring to the ground will be used in the event that the inflatable element is inflated with a gas which is lighter than air.

The two vertical branches of the mentioned at least one inflatable element can have a conical configuration with a larger section in its area closest to the ground and a section progressively decreasing towards the end farthest from the ground in order to define between both branches an airborne vehicle recovery area or window with the largest possible surface, especially at points far from the surface of the ground against which the aircraft usually impacts.

The retention means can comprise a deformable element to contribute in the absorption of part of the amount of energy of the unmanned airborne vehicle. The progressive braking of the vehicle is thus favored and the risk of damage occurring due to the collision against the retention means is minimized. The deformation of the retention means also favors that the aircraft is confined by the retention means, without falling to the ground.

The retention means can comprise a lattice element. This lattice element can be formed by an elastic net increasing the capacity of the retention means to absorb part of the amount of energy of the unmanned airborne vehicle.

The device of the invention forms an assembly which can be deformed against the thrust of the unmanned airborne vehicle, in order to absorb the amount of energy of the airborne vehicle until its complete braking, but the braking being carried out progressively. The airborne vehicle is braked by the device for recovery and is confined by it, compared to systems in which the airborne vehicle simply collides against retention means which brake it abruptly, falling to the ground. It is thus assured that the airborne vehicle is not damaged in the recovery.

All the elements of the device contribute to this form of recovery, firstly the sliding of the retention means with respect to the inflatable element which allows absorbing part of the amount of energy of the airborne vehicle, with the particularity that the retention means yield (slide) to a greater or lesser extent depending on the amount of energy of the airborne vehicle. The fact that the retention means can be deformable also contributed to this absorption of the amount of energy of the vehicle.

The inflatable element also contributes to the fact that the recovery of the aircraft is carried out without the airborne vehicle being damaged. On one hand, in the event that the vehicle is diverted and collides against the inflatable element, instead of colliding against the retention means, the inflatable body can absorb the energy of the impact due to its own deformation capacity and can even experience a slight movement to contribute to this purpose. This prevents the destruction of the aircraft as would occur if it collided against a structure based on rigid posts or masts.

On the other hand, when the airborne vehicle collides against the retention means at very high speed, the inflatable element can yield to absorb part of the amount of energy of the airborne vehicle.

The elasticity and deformability of the inflatable element also allows its adaptability on the terrain, although the latter has considerable irregularities and even withstanding moderate winds without the device for recovery being damaged.

As has been indicated, the airborne vehicle collides against the retention means of the device for recovery and is (at least partially) confined therein without suffering any deterioration, i.e., the airborne vehicle does not collide against the retention means, brake and fall to the ground, but rather it moves the retention means, brakes and is retained by the retention means without falling to the ground.

The device can optionally comprise a remote inflating system which can be activated from the airborne vehicle itself when it moves closer to the recovery area. To that end, the airborne vehicle and the device for recovery incorporate activation command and data transmitting and receiving means. In this case, the device for recovery incorporates automatic inflating means and a geographic positioning system (for example by means of GPS) for its position such that the airborne vehicle can be accurately directed to the area in which the device for recovery is located. The device for recovery can be deflated until the airborne vehicle moves closer to carry out the approach maneuvers, at which time it will send the inflation command to the device for recovery, this inflation occurring quickly while the airborne vehicle moves closer.

The device object of the invention can be formed by two independent inflatable bodies which, once inflated, are in an upright position like masts, and retention means located between both which act like a means for retaining the vehicle when they are deployed for such purposes. Each of said inflatable bodies, in its non-inflated situation, occupies a minimum volume facilitating its transport in a comfortable and practical manner, and in a working situation, is quickly inflated in the recovery location by means of a compressor which each of the inflatable bodies has at its base.

The device of the invention, in the deflated situation, occupies a very small space, which allows its storage and transport to the airborne vehicle recovery area with great ease and can be quickly and very simply inflated, even at a distance. It is therefore a device which is portable and easy to install, which allows a great versatility in the recovery of the airborne vehicle because it can be placed in virtually any place, furthermore without requiring any type of previous installation.

Another object of the invention is a method for recovering unmanned airborne vehicles by means of the described device for recovery which comprises the following steps:
- Placing in the location provided for the recovery of the airborne vehicle, in a deflated situation, a device for recovery comprising at least one inflatable element and retention means joined by sliding means to the mentioned at least one inflatable element.
- Inflating the mentioned at least one inflatable element, such that it has two vertical branches, between which the mentioned retention means are deployed
- Directing the unmanned airborne vehicle towards the retention means, causing a movement thereof to generate a sort of bag at least partially surrounding the mentioned airborne vehicle, which is confined in the retention means.
- Deflating the mentioned at least one inflatable element.
- Retrieving the airborne vehicle.

The retention means can be permanently joined to the mentioned at least one inflatable element or be an independent element which is coupled to the inflatable element at the time it is placed in location provided for the recovery of the airborne vehicle. In this case, the mentioned at least one inflatable element is arranged on the ground such that its two vertical branches are separated a distance approximate to the width of the retention means, such that at the time the mentioned at least one inflatable element is inflated, the retention means are deployed between its two vertical branches.

The method for recovery can comprise the detection of the position of the device for recovery and the remote and automatic inflation according to a command emitted by the airborne vehicle.

The method could specifically comprise the following phases:
- Determining the position of the inflating device though a geographic positioning system.
- Sending an inflation command from the airborne vehicle to the device for recovering vehicles.
- Receiving the inflation command by the device for recovering vehicles and activating the automatic inflating means.

The phases of deflating and retrieving the airborne vehicle can be carried out after its recovery by means of the device of the invention because the airborne vehicle is confined in the retention means, without suffering any type of damage, i.e., the airborne vehicle can autonomously carry out the operations necessary for its recovery independently of its retrieval.

### Description of the Drawings

To complement the description which is being made and with the aim of aiding to better understand the features of the invention according to a preferred practical embodiment thereof, a set of drawings is attached as an integral part of said description in which the following has been shown with an illustrative and non-limiting character:

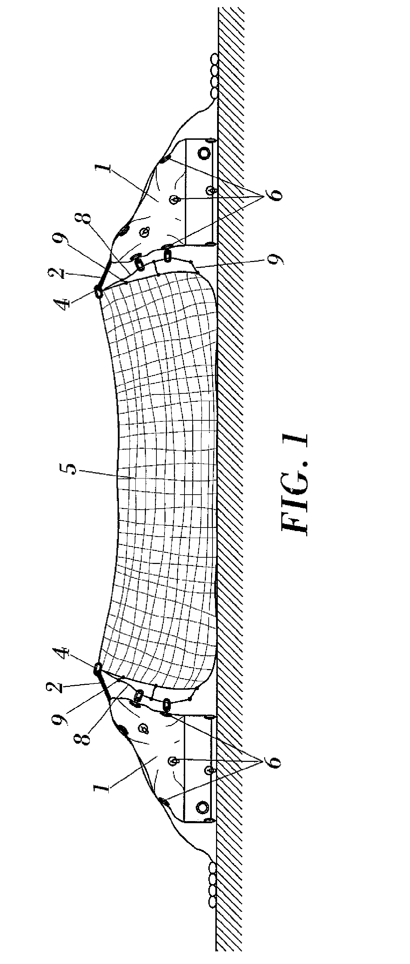

Figure 1 shows a perspective view of the device for recovering unmanned airborne vehicles object of the invention in a non-operational position.

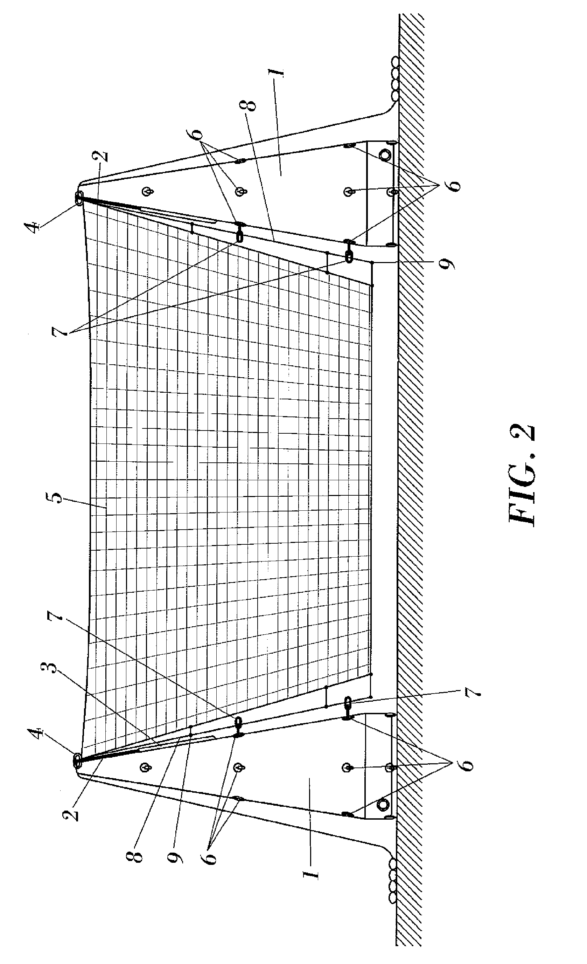

Figure 2 shows a side view of the device for recovery of the invention in an operational position.

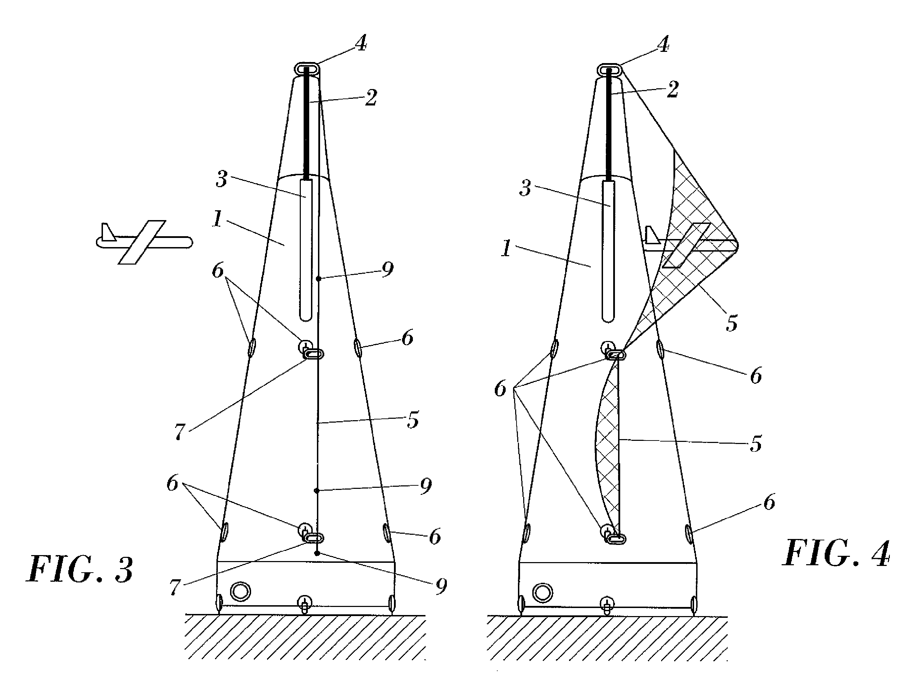

Figure 3 shows a section through the mid-area of the retention means of an elevational view of the device in the same situation as in the previous figure.
Figure 4 shows a view like that of the previous figure, in which a vehicle retained in the retention means has been shown.
Figure 5 shows a block diagram with a remote operation of the device for recovery.

### Preferred Embodiment of the Invention

In view of the indicate figures, it can be observed that in one of the possible embodiments of the invention, the device for recovering unmanned airborne vehicles comprises at least two inflatable bodies (1) which, once inflated, are in an upright position like masts, between which a net (5) acting as a means for retaining the vehicle is arranged. In the non-inflated situation, each of said inflatable bodies (1) occupies a minimum volume facilitating its transport and storage, and in a working situation, is quickly inflated in the recovery location by means of a compressor incorporated at the base of the inflatable bodies (1).

In the inflated situation the inflatable bodies (1) have a preferably conical configuration, although they can have any other configuration, having at their upper part a rod (2) comprising a tube of a lightweight and resistant material, such as for example carbon fiber, assembled in a flap (3) provided in the perimetral area of each of the inflatable bodies (1).

The rod (2) is configured such that it allows first coupling means (4), formed by a loop for example, to be moored, which means are arranged at the upper ends of the net (5). Likewise, each of the inflatable bodies (1) has throughout its entire surface a plurality of hooking means (6), formed by loops or rings for example, intended for the coupling with second coupling means (7) of the net (5), for example of the snap hook type or the like.

The net (5) comprises a mesh and ropes (8) which are arranged joined by means of knots (9) to the side edges of the mesh at different distant points, each of the second coupling means (7), such as a snap hook for example, being arranged between two consecutive knots (9) of the rope (8) between which it can slide. Each of the ropes (8) is in turn extended through the first coupling means (4), such as a loop for example, located at the end of the net (5), being extended to the ground or the support surface, in which it can be fixed by means of any known means, such as a pin for example, thus securing the net (5) to the terrain.

The arrangement, instead of pins at the end of each of the ropes (8), of a ballast or similar element, such as a chain for example, for the purpose of allowing a certain sliding of the rope (8) and therefore a sliding of the net (5) itself is contemplated as an embodiment variant.

Each of the inflatable bodies (1) can incorporate in the mentioned hooking means (6), which can comprise loops, ties or guys allowing its anchorage in those situations requiring it.

In another embodiment, the inflatable bodies (1) can be joined through an inflatable element which, in the inflated position, would be arranged between the two inflatable bodies (1) in the area closest to the ground, which inflatable element would be supported on the ground.

In another embodiment, the device for recovery comprises a single inflatable element comprising a part which, in the inflated position, has two vertical branches between which the net is arranged by means of the sliding means. The inflation of a single element would thus be required.

Having sufficiently described the device, a method for recovering unmanned airborne vehicles by means of the device set forth above is described below, said method comprising the following steps:
- Placing, in a deflated situation, the inflatable bodies (1) in the location provided for the recovery of the airborne vehicle, such that the distance between said inflatable bodies (1) is on the order of the width of the net (5).
- Placing the net (5) between the two inflatable bodies (1), in a folded situation.
- Coupling the second coupling means (7) of the net (5) in the hooking means (6) of each of the inflatable bodies (1) and the first coupling means (4) located at the upper ends of the net (5) in the rods (2) located at the upper ends of the inflatable bodies (1).
- Inflating the inflatable bodies (1), preferably by means of a compressor located at the base of said inflatable bodies (1).
- The possibility is contemplated of clamping the inflatable bodies (1) by means of additional fixing means, such as pins for example, in the terrain or support surface of the device for recovery.
- Directing the unmanned airborne vehicle towards the net (5), in which it is retained, and after which it is retrieved.
- Deflating the inflatable bodies (1).
- Recovering the airborne vehicle, removing it.
- Decoupling all the coupling means (4, 7) and hooking means (6).
- Disassembling the net (5).
- Folding the net (5) and the inflatable bodies (1).

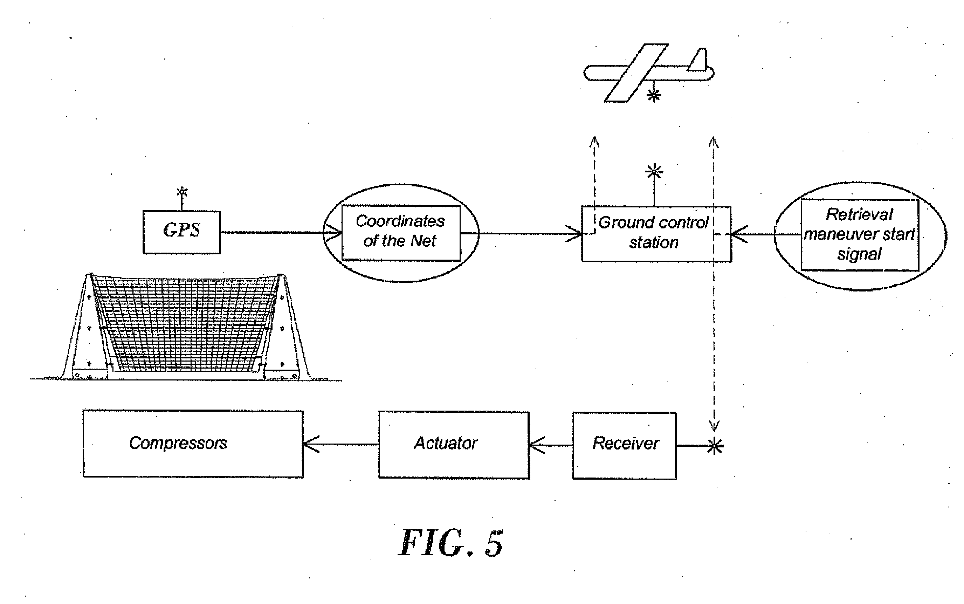

As shown in Figure 5, the device for recovery can be provided for its inflation in a remote manner. To that end, the device for recovery incorporates a global position system (GPS) sending its position coordinates to a control station. When the airborne vehicle is carrying out the approach maneuvers, it sends to the control station a recovery maneuver start signal to which the control station responds by sending the position of the device for recovery to the airborne vehicle. Simultaneously, the control station sends a signal to automatic inflating means provided in the device for recovery which activate the compressors, causing the inflation of the inflatable bodies, the net being deployed.

## Claims

1. Device for recovering unmanned airborne vehicles, comprising support means connected to the ground and retention means connected to the support means, it being possible for the device to occupy a non-operational position and an operational position in which the retention means are interposed in the path of the unmanned airborne vehicle, **characterized in that** the support means consist of at least one inflatable element (1) comprising a part which, in the inflated position, has two vertical branches and **in that** the mentioned retention means (5) are joined to the mentioned part of the at least one inflatable element (1) by sliding means (2), (4), (6), (7), such that the retention means (5), by the thrust of the unmanned airborne vehicle, move and at least partially surround the mentioned airborne vehicle, which is confined in the mentioned retention means.

2. Device for recovering unmanned airborne vehicles according to claim 1, wherein the mentioned at least one inflatable element (1), in the inflated position, is supported on the ground.

3. Device for recovering unmanned airborne vehicles according to claim 2, wherein the mentioned at least one inflatable element (1) comprises means for fixing and anchoring to the ground.

4. Device for recovering unmanned airborne vehicles according to claim 1, wherein the mentioned two vertical branches have a conical configuration with a larger section in their area closest to the ground and a section progressively decreasing towards the end farthest from the ground.

5. Device for recovering unmanned airborne vehicles according to claim 1, wherein the retention means (5) comprise a deformable element.

6. Device for recovering unmanned airborne vehicles according to claim 1, wherein the retention means (5) comprise a lattice element.

7. Device for recovering unmanned airborne vehicles according to claim 6, wherein the lattice element is formed by an elastic net to absorb part of the amount of energy of the unmanned airborne vehicle.

8. Device for recovering unmanned airborne vehicles according to claim 1, wherein the mentioned at least one inflatable element (1) and the retention means (5) form an assembly which can be deformed against the thrust of the unmanned airborne vehicle, in order to absorb the amount of energy of the airborne vehicle until its complete braking.

9. Device for recovering unmanned airborne vehicles according to claim 1, additionally comprising a remote inflating system for inflating the mentioned at least one inflatable element (1), in order to deploy the retention means (5).

10. Device for recovering unmanned airborne vehicles according to claim 9, additionally comprising automatic inflating means, a geographic positioning system and command and data transmitting and receiving means with respect to the unmanned airborne vehicle.

11. Device for recovering unmanned airborne vehicles according to claim 1, wherein the mentioned at least one inflatable element (1) comprises two inflatable bodies independent from one another which, in the inflated position, are in an upright position, like masts, between which the retention means (5) are deployed.

12. Device for recovering unmanned airborne vehicles according to claim 11, wherein the inflatable bodies (1) have a compressor located at their base by means of which they are inflated.

13. Device for recovering unmanned airborne vehicles according to claim 11, wherein in the inflatable bodies (1) comprise, in their part farthest from the ground in the inflated situation, first hooking means (2) on which there are coupled first coupling means (4) arranged at one of the ends of the retention means (5) and in that the inflatable bodies (1) comprise second hooking means (6), distributed over their outer surface, wherein second coupling means (7) of the retention means (5) are coupled and in that the retention means (5) comprise a mesh and ropes (8) which are arranged joined by means of knots (9) to the side edges of the mesh at different distant points, each of the second coupling means (7) being arranged between two consecutive knots (9) of the rope (8) between which it can slide.

14. Device for recovering unmanned airborne vehicles according to claim 13, wherein the first hooking means (2) are formed by a rod (2) comprising a tube of lightweight and resistant material assembled in a flap (3) provided in the perimetral area of each of the inflatable bodies (1).

15. Device for recovering unmanned airborne vehicles according to claim 13, wherein the second hooking means (7) comprise snap hooks.

16. Device for recovering unmanned airborne vehicles according to claim 13, wherein the first coupling means (4) and the second coupling means (6) comprise loops.

17. Device for recovering unmanned airborne vehicles according to claim 13, wherein the ropes (8) are extended through the first coupling means (4) to the ground or the support surface, in which it is fixed.

18. Device for recovering unmanned airborne vehicles according to claim 13, wherein the ropes (8) have at their ends pins fixing them to the ground or support surface.

19. Device for recovering unmanned airborne vehicles according to claim 13, wherein the ropes (8) have at their ends a ballast or similar element supported on the ground or support surface.

20. Method for recovering unmanned airborne vehicles, **characterized in that** it comprises the following steps:
- Placing in the location provided for the recovery of the airborne vehicle a device for recovery according to any of the previous claims, in a deflated situation, the device for recovery comprising at least one inflatable element (1) and retention means (5) joined by sliding means to the mentioned at least one inflatable element (1).
- Inflating the mentioned at least one inflatable element (1), such that it has two vertical branches, between which the mentioned retention means (5) are deployed.
- Directing the unmanned airborne vehicle towards the retention means (5), causing a movement thereof to generate a sort of bag at least partially surrounding the mentioned airborne vehicle, which is confined in the retention means (5).
- Deflating the mentioned at least one inflatable element.
- Retrieving the airborne vehicle.

21. Method for recovering unmanned airborne vehicles according to claim 20, additionally comprising the detection by the airborne vehicle of the geographic position of the device for recovery.

22. Method for recovering unmanned airborne vehicles according to claim 20, comprising the remote and automatic inflation of the mentioned at least one inflatable element (1), according to a command emitted by the airborne vehicle.
